Europäisches Patentamt

(19) **European Patent Office**

Office européen des brevets

(11) Veröffentlichungsnummer: **0 016 440**
**B1**

(12) **EUROPÄISCHE PATENTSCHRIFT**

(45) Veröffentlichungstag der Patentschrift:
18.07.84

(51) Int. Cl.³: **A 01 D 43/06,** A 01 D 51/00,
A 01 D 90/00

(21) Anmeldenummer: 80101355.8

(22) Anmeldetag: 14.03.80

(54) **Mähvorrichtung.**

(30) Priorität: 16.03.79 DE 2910377
28.11.79 DE 2947899

(43) Veröffentlichungstag der Anmeldung:
01.10.80 Patentblatt 80/20

(45) Bekanntmachung des Hinweises auf die Patenterteilung:
18.07.84 Patentblatt 84/29

(84) Benannte Vertragsstaaten:
AT BE CH FR GB IT LU NL SE

(56) Entgegenhaltungen:
AT - A - 328 871
DE - A - 1 632 758
DE - A - 2 339 584
DE - U - 7 826 127
FR - A - 2 260 280
GB - A - 1 473 926
US - A - 2 803 847
US - A - 3 351 384
US - A - 3 779 158
US - A - 3 816 986
US - A - 3 901 008
US - A - 4 040 643
US - A - 4 117 983

LANDTECHNIK, Heft 16, 23. Jahrgang, August 1968,

(73) Patentinhaber: **Maschinen-Mohr, Höttinger Strasse,
D-8836 Ellingen/Bayern (DE)**

(72) Erfinder: **Mohr, Hermann, Höttinger Strasse,
D-8836 Ellingen/Bayern (DE)**

(74) Vertreter: **Patentanwälte Czowalla . Matschkur +
Partner, Königstrasse 1, D-8500 Nürnberg 106 (DE)**

(56) Entgegenhaltungen: (Fortsetzung)
**München, DE, E. DONNE: "Stärkere Schlepper -
grössere Wagen", Seiten 538-541**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Mähvorrichtung mit einem auf einem Fahrzeug angeordneten, nach rückwärts geschlossenen Behälter mit einem geneigten Behälterboden, in den über einen, das an einem Zugfahrzeug befestigte Mähwerk übergreifenden Ansaugkasten eine flexible Rohrleitung und ein Gebläse das abgemähte Gras, Laub oder dergl. eingeblasen wird.

Bei einer aus der DE-U-7 826 127 bekanntgewordenen derartigen Mähvorrichtung ist das Gebläse vor dem Behälter angeordnet und mit einem gekrümmten Ausblasrohrstutzen mit diesem verbunden. Dabei hat es sich gezeigt, daß die Verwendung eines derartigen Ausblasrohrstutzens auch bei großem Querschnitt die Arbeitsleistung des Gebläses erheblich beeinträchtigt und zwar erheblich stärker als Beeinträchtigungen durch die Saugleitung zum Ansaugkasten eintreten. Darüber hinaus benötigt die Anordnung des Gebläses vor dem Behälter viel Platz in Längsrichtung, der entweder das Fahrzeug entsprechend verlängert und unhandlich macht, oder aber eine Einschränkung der Länge und damit des Fassungsvermögens des Behälters bedingt.

Aus der AT-A-328 871 ist im Zusammenhang mit einem Ladewagen bereits eine Gebläseanordnung bekanntgeworden, die unter dem Ladebehälter angeordnet ist. Dieses Gebläse dient jedoch nicht zum Beladen, sondern lediglich zum Entladen des Behälters, wodurch sich die Untenanordnung geradezu zwangsläufig ergibt. Darüber hinaus ist dort das Gebläse freiliegend unter dem Behälter angeordnet, so daß es nicht geschützt ist. Bei diesem bekannten Ladewagen ist darüber hinaus eine allseitige Verkippbarkeit des Behälters vorgesehen, um künstlich eine Neigung der Bodenfläche zum Einlauftrichter des Gebläses beim Entladen herstellen zu können.

Der Erfindung liegt die Aufgabe zugrunde, eine Mähvorrichtung der eingangs genannten Art so auszugestalten, daß ausgehend von einem bestimmten Gebläse eine größere Einblasleistung einerseits und eine bei vorgegebener Baulänge des Fahrzeugs größere Abmessung des Behälters erzielt werden kann.

Zur Lösung dieser Aufgabe ist erfindungsgemäß vorgesehen, daß der Behälter auf einem mit dem Zufahrzeug verbindbaren, mit Laufrädern versehenen Anhänger aufgebaut ist, daß das Gebläse einschließlich seiner Antriebsvorrichtung unter dem geneigten Behälterboden am Fahrgestell angeordnet ist und daß der Behälter mit das Gebläse und die Antriebsvorrichtung übergreifenden, nach unten über den Behälterboden überstehenden Verlängerungen der Frontwand und der Seitenwände versehen um eine im Bereich seines hinteren Endes gelegene Achse kippbar am Fahrgestell gelagert ist.

Durch die erfindungsgemäße kippbare Lagerung des Behälters ergeben sich gleichzeitig eine Reihe von für den Betrieb bedeutsamen Vorteilen. Zum einen läßt sich durch die kippbare Lagerung des Behälters die Neigung des Behälterbodens reduzieren, da der Austrag ja nicht durch das Abrutschen des Grases oder dergl. auf dieser flach geneigten Bodenplatte zustande kommt, sondern durch das steilere Anheben beim Kippen des Behälters in jedem Fall gewährleistet ist.

Das nutzbare Volumen des Behälters kann durch die geringere Bodenneigung daher erheblich gesteigert werden, während gleichzeitig der Austrag des gesammelten Grases oder Laubes sogar noch gegenüber den bisher steileren Bodenanordnungen verbessert wird.

Darüber hinaus ermöglicht die kippbare Lagerung des Behälters in Verbindung mit der Tatsache, daß auch die Verkleidungsteile des Gebläses und seiner Antriebsvorrichtung mit dem Behälter verbunden und mit ihm angekippt werden, eine völlige Freilegung dieser wesentlichen Antriebsteile, so daß Wartungsarbeiten und Reparaturen am Gebläse und am Gebläsemotor außerordentlich leicht durchgeführt werden können.

Zum Ankippen des Behälters zum Zwecke seiner Entleerung soll in Weiterbildung der Erfindung eine innerhalb des Behälters, vorzugsweise unmittelbar neben der Vorderwand angeordnete Hydraulik-Zylinderanordnung vorgesehen sein, die bevorzugt unmittelbar vom Zugfahrzeug aus betätigbar sein soll, so daß die Bedienungsperson zum Entleeren des Behälters gar nicht vom Zugfahrzeug absteigen braucht. Diese Anordnung der Hydraulik-Zylinderanordnung innerhalb des Behälters ermöglicht dabei die Verwendung auch längerer Hubzylinder, so daß sehr steile Kippwinkel erzielt werden können. Eine Anlenkung außen am Behälter wäre entweder nur unter dem Boden, wo allenfalls sehr kurze Hubzylinder unterbringbar wären, oder auf der Rückseite des Behälters, wo jedoch dann der Hebelarm, bezogen auf die Schwenkachse, viel zu klein wäre, möglich.

Um nicht auf das geringe Aufschwenken der entriegelten, als Hecktür ausgebildeten Rückwand zum Austrag des gesammelten Grases oder dergl. beim Ankippen des Behälters angewiesen zu sein, kann in weiterer Ausgestaltung der Erfindung vorgesehen sein, daß diese um die Oberkante schwenkbare Rückwand des Behälters mit einem Schwenkgestänge versehen ist, das beim Ankippen des Behälters automatisch die Hecktür öffnet, so daß das Herausrutschen des Grases durch diese Hecktür in keiner Weise behindert ist. Besonders einfach läßt sich dies dadurch erzielen, daß das Schwenkgestänge mit einer Seilzugbetätigungseinrichtung versehen ist, wobei die Besonderheit darin besteht, daß diese Seilzugbetätigungseinrichtung nach einer Umlenkung am Fahrgestell am Behälter, insbesondere unter dem Behälterboden, angreift. Dadurch wird mit dem Ankippen des Behälters der Seilzug betätigt, und damit selbsttätig die Öffnung der Hecktür in die Wege geleitet.

Nachdem das Gebläse beim Ankippen des Behälters zum Zwecke seiner Entleerung sowieso sinnvollerweise nicht arbeitet, bedarf es auch keiner flexiblen Schlauchverbindung zwischen dem Auslaß des Gebläses und der Einblasöffnung des Behälterbodens, was lediglich zu einem erheblichen Strömungswiderstand und damit einer starken Reduzierung der Gebläseleistung führen würde. Erfindungsgemäß kann daher die Ausbildung so getroffen sein, daß das Gebläse mit seinem Auslaßstutzen in die Einblasöffnung des Behälterbodens frei einragt, wobei zusätzlich vorgesehen ist, daß diese Einblasöffnung mit einer sie bei abgeschaltetem Gebläse automatisch abdeckenden Verschlußklappe versehen ist. Auf diese Weise ist verhindert, daß in den Behälter eingeblasenes Gras beim Abschalten des Gebläses in dieses zurückfällt oder gar beim Ankippen des Behälters auf die Antriebsvorrichtung fällt, wodurch diese erheblich verschmutzt wäre, was sowohl ihrer Funktionstüchtigkeit abträglich wäre, als auch insbesondere ihre Wartung außerordentlich erschweren müßte.

In besonders vorteilhafter Weise läßt sich diese automatische Verschlußklappe dadurch erzielen, daß das Gewicht der am oberen Ende am Behälterboden anscharnierten, beispielsweise über eine flexible Gummileiste anscharnierten, Verschlußklappe so auf die Gebläseleistung abgestimmt ist, daß sie bei der minimal zulässigen Gebläseleistung selbsttätig angehoben wird.

Um bei dieser auf der Schwerkraftwirkung basierenden automatischen Verschlußklappe in jedem Fall zu gewährleisten, daß beim Abschalten der Klappe auch wieder in ihre Verschlußstellung herunterfallen kann, soll ein, ein überschlagen der Verschlußklappe nach rückwärts verhindernder Anschlag vorgesehen sein, wobei dieser Anschlag, der sicherstellt, daß die Klappe maximal bis zur Vertikalen angehoben wird, so daß auch tatsächlich durch die Schwerkraft wieder in ihre Verschlußstellung herunterklappen muß, in Ausgestaltung der Erfindung auch derart federnd ausgebildet sein kann, daß die Verschlußklappe mit steigendem Gebläsedruck stärker öffnet. Der Anschlag läßt sich beispielsweise dadurch realisieren, daß am unteren, d. h. dem Scharnier abgelegenen Ende der Verschlußklappe eine überstehende Stange befestigt ist, die vor einer Verkippung der Verschlußklappe in die Vertikale an der Behälterdeckwand anschlägt.

Eine weitere Möglichkeit zur Vergrößerung des Füllraums des Behälters ohne Einbuße an Manövrierfahigkeit des Anhängers bzw. des Gesamtgespanns kann in weiterer Ausgestaltung der Erfindung ein der Deckwand des Behälters und dem, vorzugsweise als schwenkbare Türklappe ausgebildete Luftaustrittsgitter zwischenordenbarer Rechteckkasten mit wenigstens einer als Luftaustrittsgitter ausgebildeten Seitenwand vorgesehen sein. Diese besondere Ausbildung ermöglicht es, den Füllraum von variabler Weise den jeweiligen Erfordernissen anzupassen, indem einfach das Luftaustrittsgitter abgenommen und ein mehr oder weniger hoher Rechteckkasten an seiner Stelle auf die Deckwand des Behälters aufgesetzt wird, während das abgenommene Luftaustrittsgitter wiederum diesen Kasten nach oben abdeckt. Dabei ist es von Bedeutung, daß dieser Rechteckkasten wenigstens eine ebenfalls als Luftaustrittsgitter ausgebildete Seitenwand aufweist, da, wie die Erfahrung gezeigt hat, ohne derartige zusätzliche Luftaustrittsöffnungen in den Kastenseitenwänden eine Füllung des aufgesetzten Rechteckkastens beim Einblasen von Gras und Laub nicht gewährleistet wäre.

In vielen Fällen, beispielsweise zum Ausblasen von schwer zugänglichen Hecken oder dergl., werden Gebläse eingesetzt, um das Laub herauszublasen und außerhalb auf einer ebenen Wiesenfläche von einer Kehrmaschine aufnehmen zu können. Diese Ausblasfunktion läßt sich in einfacher Weise und praktisch ohne jeglichen Mehraufwand auch mit der erfindungsgemäßen Mähvorrichtung erzielen, wenn der Gebläseauslaßstutzen so ausgebildet ist, daß an ihn eine vorzugsweise durch die Luftaustrittsgitter der Deckwand eingeführte flexible Rohrleitung daran anschließbar ist.

Für neu angelegte Sport- und Rasenplätze mit besonders weichem Boden und einer demzufolge vergrößerten Gefahr eines Einsinkens der Räder insbesondere bei gefülltem Behälter, läßt sich eine verbesserte Arbeitsleistung dadurch erzielen, daß die vorzugsweise als Teleskopachse ausgebildete Radachse des Anhängers derart als Steckachse ausgebildet ist, daß über ihre gesamte Länge verteilt, gegebenenfalls gleichzeitig eng benachbart, Radpaare aufsteckbar sind. Beim Aufstecken einer Vielzahl von Radpaaren entsteht praktisch die gleiche Wirkung, als wenn man eine lange durchgehende Walze verwenden würde, d. h. der spezifische Bodendruck wird erheblich reduziert und somit ein Einsinken der Räder und das Auftreten von Furchen verhindert. Darüber hinaus ist es auch möglich, für spezielle Anwendungszwecke lediglich ein sehr eng benachbartes Radpaar vorzusehen, was zwar die Kippstabilität des Anhängers etwas beeinträchtigt, auf der anderen Seite aber ein Umfahren auch sehr kleiner Blumenrabatten u. dgl. möglich macht.

Um schließlich auch Gras und Laub arbeitssparend an Stellen aufsaugen zu können, die selbst mit der wendigsten Auslegung eines erfindungsgemäßen Grasfangbehälters nicht mehr befahren werden können, kann erfindungsgemäß ein an die flexible Rohrleitung ankuppelbarer, auf Rädern laufender und mit einem Schiebegriff versehener Ansaugkasten vorgesehen sein.

Um ein Zusetzen des Einsaugschlitzes dieses Ansaugkastens durch Laub, Zweige oder dergl. und damit die Gefahr eines Funktionsausfalls zu vermeiden, kann auf dem Fahrbahnansaugkasten eine motorgetriebene Räumstange schwenkbar gelagert sein, die mit ihrem freien abgewinkelten Ende in den Einsaugschlitz des Ansaugkastens einragt und somit durch das fortlaufende Verschwenken ein derartiges Zusetzen des Einsaugschlitzes sicher verhindert. Der Räumstangenantrieb läßt sich am einfachsten als Elektromotor ausbilden, der über ein, vorzugsweise an der flexiblen Rohrleitung befestigtes Stromkabel mit der Lichtmaschine des Gebläsemotors verbindbar ist. Zu diesem Zweck kann eine entsprechende Steckdose in die Stirnwand des Anhängers eingebaut sein, die eine derartige einfache Stromabnahme über die Lichtmaschine des Gebläsemotors ohne besondere Verdrahtungsarbeiten und ohne Öffnung des Verkleidungsgehäuses gestattet.

Schließlich liegt es auch noch im Rahmen der Erfindung, im Bereich des Einsaugschlitzes am Boden des vorzugsweise einachsigen Ansaugkastens federnde, einen Laubrechen oder dergl. bildende Stahlzinken zu befestigen, um insbesondere nasses, am Boden festgebackenes Laub aufzukratzen, so daß es anschließend eingesaugt werden kann.

Eine verbesserte Widerentladbarkeit bei gleichzeitiger Bedienungsfreundlichkeit läßt sich in Ausgestaltung der Erfindung auch dadurch erzielen, daß die als vorzugsweise um die Oberkante schwenkbare Tür ausgebildete Rückwand über einen Seilzug vom Zugfahrzeug aus betätigbar ist.

Auf diese Weise kann der Fahrer des Zugfahrzeuges den Behälter — was beim Mähen größerer Flächen häufig erforderlich ist — problemlos entleeren, indem er vom Zugfahrzeug aus die Rückwand öffnet und gleichzeitig nach vorne wegfährt, so daß das abgemähte Gras an der vorgesehenen Lagerstelle nach hinten herausrutschen kann.

Eine besonders einfach aufgebaute und in der Funktion wirkungsvolle Schnellverriegelung ergibt sich in Ausgestaltung der Erfindung dadurch, daß der von unten einen seitlichen Riegelzapfen an der Rückwand übergreifende Schwenkriegel starr mit einem Kniegelenkhebel verbunden ist, der über eine Feder und einen in ein Langloch des dem Schwenkriegel abgelegenen Kniegelenkhebels einragenden Mitnahmezapfen mit der Rückwand verbunden ist.

Beim Verschwenken des Schwenkriegels, beispielsweise dadurch, daß der Seilzug an einem Querarm von dessen unter dem Behälter gelagerter Schwenkachse angreift, schwenkt dieser Schwenkarm außer Eingriff mit dem Riegelzapfen an der Rückwand. Diese Verschwenkung ist jedoch nur dadurch möglich, als in der Anfangsphase der Schwenkbewegung der Kniegelenkhebel die Rückwand noch nicht mitnimmt und in die Öffnungsstellung verschwenkt. Zunächst kann sich nämlich wegen des vorgesehenen Langlochs der an der Rückwand des Behälters angreifende Kniegelenkhebel frei verschieben. Erst nach einer gewissen Verschiebebewegung, die der notwendigen Außeneingriffverschwenkung des Riegelzapfens und des Schwenkriegels entspricht, schlägt das Ende des Langlochs am Mitnahmezapfen der Rückwand an und verschwenkt diese bei weiterer Verdrehung der Schwenkachse des Schwenkriegels über den Seilzug nach oben in die Öffnungsstellung. Beim Freigeben des Seilzugs fällt die Tür in die Schließstellung, wobei der Schwenkriegel wiederum in seine Verriegelungsstellung einfällt, in der er durch die am Ende des Kniegelenkhebels angeordnete Feder gehalten wird.

Die zur leichten Entleerung des Behälters dienende geneigte Anordnung des Behälterbodens, die es darüber hinaus ja erst ermöglicht, unmittelbar unter dem Behälterboden das Gebläse anzuordnen, was für eine leistungsfähige Gebläseausbildung unerläßlich ist, lassen sich die Behälter der bislang bekannten Mähvorrichtungen überhaupt nicht für Transportzwecke einsetzen. Es ist also beispielsweise nicht möglich, etwaige Rechen, Sensen oder einen kleinen Handmäher mit der Mähvorrichtung zu transportieren, da eine Beladung des Behälters über die Rückwand nicht möglich ist, da alle Gegenstände sofort in Folge der geneigten Bodenwand wieder herausrutschen würden.

Zur Vermeidung dieser Schwierigkeiten ist erfindungsgemäß vorgesehen, daß die in der Deckwand des Behälters liegenden Luftaustrittsgitter als vorzugsweise schwenkbare Türklappen zum Beladen des Behälters ausgebildet sind. Diese einfache Ausbildung der sowieso notwendigen Luftaustrittsgitter in der Deckwand als Türklappen erhöht die Einsatzfähigkeit der erfindungsgemäßen Mähvorrichtung ganz erheblich, da es nicht mehr — wie bisher — notwendig ist, daß am Einsatzort der Mähvorrichtung zusätzliche benötigte Werkzeuge durch ein zweites Fahrzeug nachgeliefert werden müssen.

Mit besonderem Vorteil kann der Anhänger ein Einachser mit im Bereich des hinteren Endes angeordneten Laufrädern und einem höhenverstellbaren Stützrad am vorderen Ende sein. Das höhenverstellbare Stützrad, welches im angekuppelten Zustand an das Zugfahrzeug hochgezogen ist, ermöglicht nach dem Abkuppeln ein leichtes Manövrieren des Anhängers für sich, welches umgekehrt auch das Wiederankuppeln an das Zugfahrzeug ganz entscheidend erleichtert. Mit besonderem Vorteil kann schließlich vorgesehen sein, daß der Behälter derart ausgebildet ist, daß er statt auf das Fahrwerk des vorstehend beschriebenen einachsigen Anhängers wahlweise auf die Lagefläche eines Kraftfahrzeugs aufsattelbar ist. Es bedarf durch diese Ausbildung dann nurmehr eines Bautyps derartiger Behälter, unabhängig davon, ob sie als Nachläufer oder als aufgesattelte, lösbar auf einer Ladefläche eines Kraftfahrzeugs angeordnete Baueinheit Verwendung finden soll.

Eine erfindungsgemäße Mähvorrichtung läßt sich sehr preisgünstig einerseits und auf der anderen Seite mit großem Fassungsvermögen herstellen, wenn der Behälter im Gegensatz zu der bisher bekanntgewordenen selbsttragenden Kastenbauweise in Rahmenbauweise aus dünnen mit eingeprägten Rippen versteiften Blechplatten aufgebaut ist, die längs der Kanten durch Winkelschienen verbunden sind.

Schließlich liegt es auch im Rahmen der Erfindung, die Laufräder mit jeweils einzelnen Achsstummeln zu versehen, die zur Spurbreitenänderung feststellbar herausziehbar am Fahrgestell gelagert sind. Durch diese Maßnahme kann — unter Beibehaltung einer vernünftigen Spurbreite, so daß das Fahrzeug auch im üblichen Straßenverkehr und auch an Engstellen eingesetzt werden kann — die Mähvorrichtung beim Quermähen an steilen Hängen so weit stabilisiert werden, daß sie auch bei voll beladenem Behälter nicht umkippen kann. Gerade bei steilen Hängen ist aber ein vertikales Mähen nach oben oder unten — insbesondere wegen der häufig fehlenden Wendemöglichkeit — überhaupt nicht möglich, so daß nur ein Arbeiten übrigbleibt, bei welchem die Mähvorrichtung praktisch senkrecht zur Fallinie quer am Hang bewegt wird.

Es hat sich gezeigt, daß beim Arbeiten mit Mähvorrichtungen, bei denen das abgemähte Gras unmittelbar in einen Grasfangbehälter eingeblasen wird, immer wieder Steine, Büchsen, Flaschen oder dergl. mit angesaugt werden, die sowohl die Gefahr einer Beschädigung des Behälters, als insbesondere des Laufrades und der Schaufeln des Gebläses mit sich bringen.

Um diese Schwierigkeiten zu vermeiden, ist erfindungsgemäß vorgesehen, daß die Schaufeln schwenkbar am Gebläselaufrad angeordnet sind, so daß sie beim Anstoßen schwerer harter Gegenstände ausgelenkt werden können und somit die Gefahr eines Verbiegens oder gar Brechens ausgeschlossen ist. Die Schaufelblätter des Gebläserads werden durch die Zentrifugalkraft in ihrer radial nach außen weisenden Betriebsstellung gehalten, so daß im übrigen die Gebläseleistung durch die schwenkbare Anlenkung nicht beeinträchtigt ist. Neben der Vermeidung der Bruchgefahr der Schaufelblätter beim Ansaugen harter Gegenstände wird durch die schwenkbare Anlenkung auch die Geräuschentwicklung gemindert, was wegen des Einsatzes derartiger Mähvorrichtungen am Tage insbesondere in ruhebedürftigen Zonen (Schule, Krankenhäuser, Parks, Sanatorien oder dergl.) von ganz entscheidender Bedeutung ist.

Die schwenkbare Anlenkung läßt sich sehr einfach in der Weise realisieren, daß das Gebläserad in einen Schlitz des Schaufelblattes und zwischen Versteifungsrippen des Schaufelblattes einragt, die von einem Schwenkbolzen durchsetzt sind. Die Schlitztiefe begrenzt gleichzeitig den Schwenkbereich der Schaufelblätter, da das Ende des Schlitzes bei einem bestimmten Verschwenkungswinkel an der Kante des Gebläserades aufsitzt und damit eine weitergehende Verschwenkung verhindert.

Weitere Vorteile, Merkmale und Einzelheiten der Erfindung ergeben sich aus der nachfolgenden Beschreibung eines Ausführungsbeispiels sowie an Hand der Zeichnung. Dabei zeigt

Fig. 1 eine perspektivische Ansicht eines erfindungsgemäßen Anhängers mit ankippbarem Behälter in seiner angekippten Entleerstellung,

Fig. 2 einen schematischen Längsschnitt durch den Anhänger mit abgesenktem Behälter,

Fig. 3 eine perspektivische Ansicht des Behälters mit aufgesetztem Rechteckkasten zur Vergrößerung des Füllraums,

Fig. 4 eine schematische Stirnansicht zur Verdeutlichung der möglichen Aufsteckbarkeit mehrerer Radpaare,

Fig. 5 eine Ansicht des Anhängers mit einem an dem Gebläseeinlaß über eine flexible Rohrleitung angekuppelten, von Hand verschiebbaren Ansaugkasten,

Fig. 6 eine vergrößerte Stirnansicht des Ansaugkastens und

Fig. 7 einen vergrößerten Schnitt längs der Linie VII-VII in Fig. 5,

Fig. 8 eine perspektivische Seitenansicht einer abgewandelten Ausführungsform einer erfindungsgemäßen Mähvorrichtung,

Fig. 9 eine perspektivische Teilansicht des Anhängers nach Fig. 8 bei geöffneter Rückwand,

Fig. 10 eine vergrößerte Darstellung des Schwenkgestänges nach den Fig. 8 und 9 zum Öffnen und Schließen der Rückwand,

Fig. 11 eine schematische Darstellung der Spurbreitenverstellung des Anhängers nach Fig. 8,

Fig. 12 eine Ansicht des mit Hilfe eines zusätzlichen Stützrades abgestellten Anhängers nach Fig. 8 mit in Öffnungsstellung befindlichem, als Türklappe ausgebildeten Luftaustrittsgitter,

Fig. 13 eine perspektivische Ansicht des Gebläserads des Ansauggebläses mit schwenkbaren Schaufelblättern, wobei der Übersichtlichkeit halber nur ein Schaufelblatt dargestellt ist,

Fig. 14 einen Schnitt längs der Linie XIV-XIV in Fig. 13 und

Fig. 15 eine Seitenansicht eines Kleintransporters, auf welchen der vom Fahrwerk des Anhängers gemäß den Fig. 8 und 9 abgehobene Behälter mit eingebautem Gebläse aufgesattelt ist.

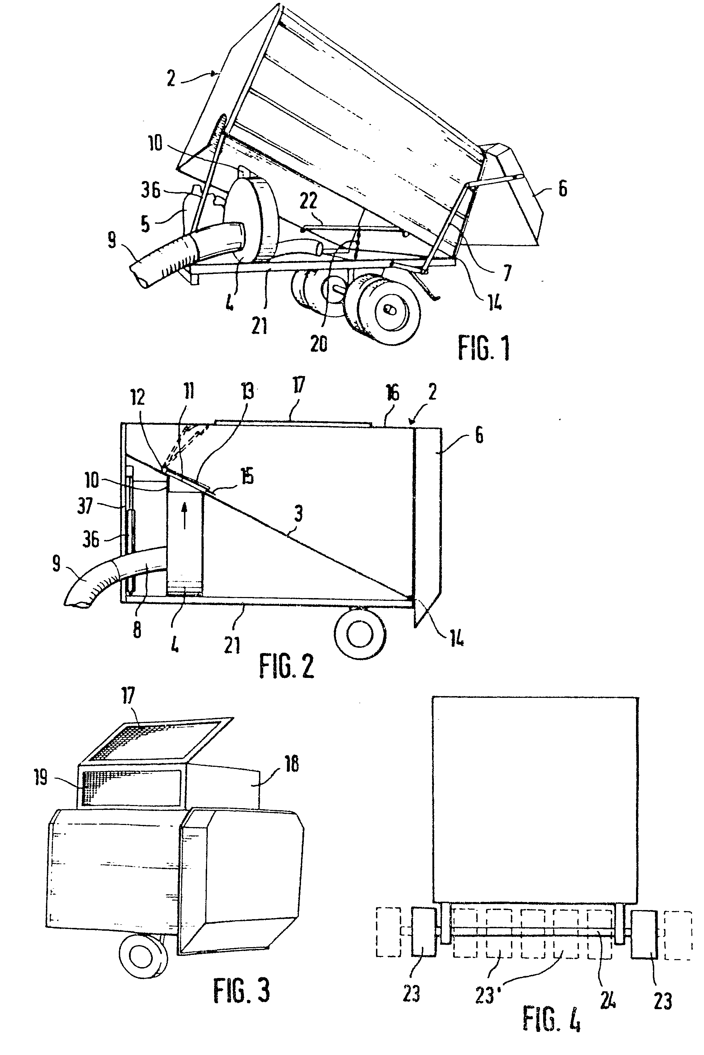

Die Fig. 1 zeigt den Anhänger einer erfindungsgemäßen Mähvorrichtung — das an sich bekannte Zugfahrzeug und die Art der Ankupplung daran sind, weil bekannt, an dieser Stelle nicht nochmals dargestellt. Der Anhänger ist mit einem geschlossenen Behälter 2 versehen, der eine nach rückwärts flach geneigte Bordwand 3 aufweist. Anstelle einer derartigen geneigten Bodenwand, die u. a. dazu dient, um unter ihr das Gebläse 4 und deren Antriebsvorrichtung 5 unterbringen zu können, könnte auch eine abgestufte Ausbildung der Bodenwand 3 vorgesehen sein. Die Rückwand 6 des Behälters 2 ist als eine am oberen Ende schwenkbar angelenkte Hecktür ausgebildet, die mit Hilfe eines in Fig. 1 angedeuteten Hebelgestänges 7 öffenbar ist. An den Einlaßstutzen 8 des Gebläses 4 läßt sich über einen teleskopartig federnden Schnellverschluß eine flexible Rohrleitung 9 anschließen, die zu einem, beispielsweise das Mähwerk am Zugfahrzeug übergreifenden, Ansaugkasten führt, der abgemähtes Gras oder Laub aufnimmt und über das Gebläse 4 in den Behälter 2 einbläst. Zu diesem Zweck ragt der Auslaßstutzen 10 des Gebläses 4 frei in eine Einblasöffnung 11 der Bodenwand 3 des Behälters 2 ein. Diese Einblasöffnung 11 ist durch eine bei 12 am oberen Ende anscharnierte Verschlußklappe 13 verschlossen, deren Gewicht so auf die Gebläseleistung abgestimmt ist, daß beim Einschalten des Gebläses die Verschlußklappe 13 angehoben wird. Beim Abschalten fällt sie aufgrund ihres Gewichts automatisch wieder auf die Einblasöffnung 11 und verschließt diese dadurch, so daß Gras oder Laub nicht aus dem Behälter 2 nach unten herausfallen kann. Der gesamte Behälter 2 ist einschließlich der Teile der Seitenwände und der Stirnwand, die unterhalb der Bodenwand 3 liegen und nur zur Verkleidung des Gebläses 4 und seiner Antriebsvorrichtung 5 dienen, um eine Achse 14 kippbar gelagert. Durch diese Kippbarkeit wird auch bei flacher Neigung der Bodenwand 3 oder gar gestufter Ausbildung dieser Bodenwand ein einwandfreier Austrag des im Behälter 2 angesammelten Grases oder Laubes sichergestellt. Gleichzeitig wird bei diesem Ankippen das Gebläse 4 und seine Antriebsvorrichtung 5 freigegeben, so daß sich ohne Beengung Wartungs- und Reparaturarbeiten an diesen wesentlichen Aggregaten ausführen lassen. Die Verschlußklappe 13, die besonders für das Ankippen des Behälters 2 von Bedeutung ist, ist am vorderen Ende mit einem Anschlagstab 15 versehen, der, wie in Fig. 2 in einer mittleren gestrichelten Stellung angedeutet ist, an der Deckwand 16 des Behälters 2 anschlägt und somit ein Überschlagen der Klappe nach rückwärts verhindert. Ein derartiges Überschlagen würde ja wiederum zur Folge haben, daß die Klappe beim Ausschalten des Gebläses nicht mehr selbsttätig in ihre Verschlußstellung zurückfällt. Durch die federnde Ausbildung dieses Stabes ist es möglich, daß bei besonders hohem Gebläsedruck die Verschlußklappe 13 noch stärker öffnet, wie es in einer zweiten fast senkrechten gestrichelten Stellung angedeutet ist. Bei 17 ist ein als schwenkbare Türklappe ausgebildetes Luftaustrittsgitter zu erkennen, welches mit wenigen Handgriffen von der Deckwand 16 abnehmbar ist, um an seiner Stelle einen (vgl. Fig. 3) Rechteckkasten 18 auf die Deckwand aufzusetzen, der an der Oberseite dann wiederum durch eben dieses Luftaustrittsgitter 17 verschlossen ist. Der Rechteckkasten 18, der wenigstens eine als zusätzliches Luftaustrittsgitter ausgebildete Seitenwand 19 aufweist, dient zur Erhöhung des Füllraums des Behälters 2 ohne Einbuße an Manövrierfähigkeit. Das zusätzliche Luftaustrittsgitter 19 ist dabei notwendig, um diesen aufgesetzten Kasten beim Einblasen tatsächlich füllen zu können, das Schwenkgestänge 7 ist mit einer Seilzugbetätigungseinrichtung versehen, wobei dieser über einen nicht dargestellten Schwenkhebel an einer Achse des Schwenkgestänges 7 angreifende Seilzug 20 nach Umlenkung um ein starres Teil des Fahrgestells 21 an der Unterseite des Behälters, im vorliegenden Ausführungsbeispiel an einer Querstrebe 22, angreift. Dadurch wird beim Ankippen des Behälters 2 in die in Fig. 1 gezeigte Entleerstellung automatisch der Seilzug 20 und damit auch das Schwenkgestänge 7 betätigt, und somit die Rückwand 6 des Behälters 2 geöffnet.

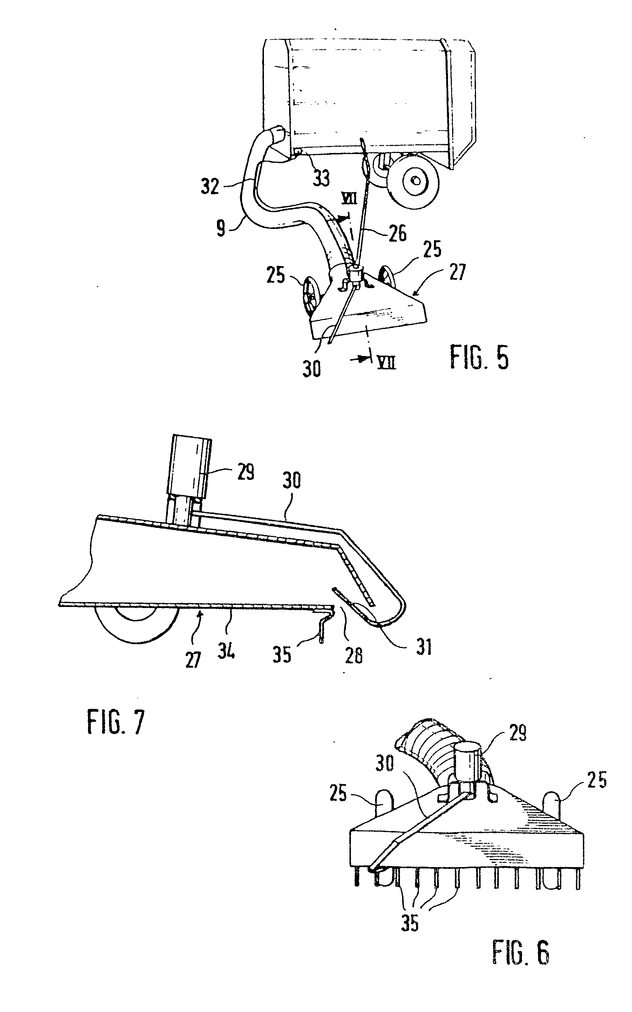

In Fig. 4 ist angedeutet, wie neben dem normalen Radpaar 23 auch zusätzliche Radpaare weiter außen oder weiter innen auf die Steckachse 24 aufgesteckt werden können, die zu diesem Zweck als Teleskopsteckachse, d. h. nach außen verlängerbar, ausgebildet sein kann. Das Aufstecken vieler Radpaare, so wie es gestrichelt in Fig. 4 dargestellt ist, ergibt eine große walzenartige Auflagefläche, so daß auch bei sehr weichem Boden gearbeitet werden kann, ohne daß das hohe Gewicht des gefüllten Anhängers zu einem Eindrücken der Räder in dem Boden führt. Durch Vorsehen des Radpaares 23' alleine ergibt sich eine gegen Seitenverkippung anfällige Anhängerausbildung, die jedoch wegen des engen Radstandes ein Umfahren auch engster Blumenrabatten und Bäume ermöglicht. An Hand der Fig. 5 bis 7 ist eine weitere Besonderheit einer erfindungsgemäßen Mähvorrichtung dargestellt, nämlich ein an Stelle des üblichen das Mähwerk des Zugfahrzeugs übergreifenden Ansaugkastens über eine relativ lange flexible Rohrleitung 9 an das Gebläse 4 des Behälters anschließbaren, auf Rädern 25 laufenden und mit einem Schiebegriff 26 versehenen Ansaugkasten 27. Dieser gesonderte schiebbare Ansaugkasten 27 ermöglicht eine Gras- und Laubaufnahme unter Verwendung einer erfindungsgemäßen Mähvorrichtung auch an solchen Stellen, die vom Fahrzeug selbst überhaupt nicht überfahren werden können, beispielsweise unter Büschen u. dgl. Um ein Zusetzen des Einsaugschlitzes 28 des Ansaugkastens 27 zu verhindern, ist ein Elektromotor 29 vorgesehen, der eine Räumstange 30 antreibt, die mit ihrem abgewinkelten freien Ende 31 in den Einsaugschlitz 28 einragt. Die Räumstange 30 wird durch den Motor 29 hin- und hergeschwenkt, wobei das hakenförmig abgebogene Ende 31 den Einsaugschlitz 28 freihält. Die Stromversorgung des Elektromotors 29 erfolgt bevorzugt über ein Stromkabel 32, welches an der flexiblen Rohrleitung 9 befestigt sein kann und an einem Steckdosenanschluß 33 am Anhänger anschließbar ist, der wiederum mit der Lichtmaschine des Gebläsemotors 5 verbunden ist. Auf der Unterseite des Bodens 34 des Ansaugkastens 27 sind federnde Stahlzinken 35 befestigt, die einen Laubrechen bilden. Beim Schieben des Ansaugkastens reißen diese federnden Stahlzinken nasses festgetretenes Laub oder Gras vom Boden ab, so daß sie eingesaugt werden können.

Das Ankippen des Behälters 2 um die Achse 14 erfolgt mit Hilfe einer innerhalb des Behälters unter der Bodenwand 3 angeordneten Hydraulik-Zylinderanordnung 36, die in dem dargestellten Ausführungsbeispiel (vgl. insbes. Fig. 1 und 2) an der einen Seite schwenkbar am Fahrgestell 21 und am anderen Ende schwenkbar an der Innenseite der Frontwand 37 des Behälters 2 angelenkt ist.

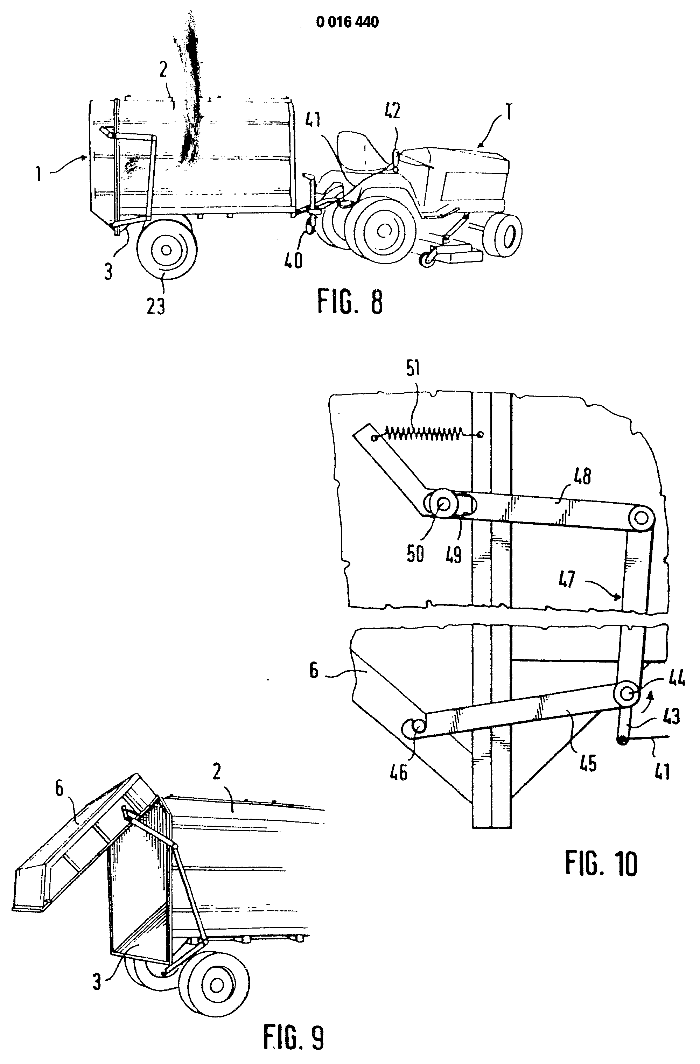

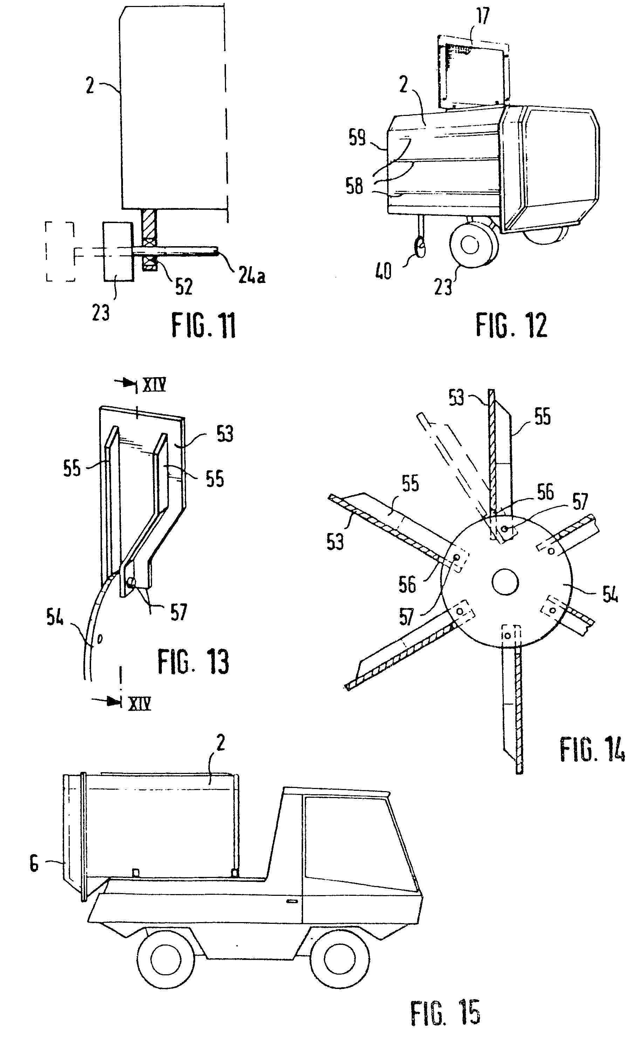

Die Fig. 8 zeigt eine weitere Ausführungsform einer erfindungsgemäßen Mähvorrichtung, bestehend aus einem Zugfahrzeug in Form eines Kleintraktors T und einem gelenkig daran angekuppelten Anhänger 1, der als Einachser mit im Bereich des hinteren Endes angeordneten Laufrädern 23 ausgebildet ist. Im Bereich des vorderen Endes ist der Anhänger 1 mit einem höhenverstellbaren Stützrad 40 versehen, welches beim Abstellen des Anhängers allein (vgl. Fig. 12) sowohl als Stütze, als insbesondere zum einfachen Manövrieren des Anhängers beim An und Abkuppeln dient.

Der Anhänger ist mit einem geschlossenen Behälter 2 versehen, der mit einer nach rückwärts geneigten Bodenwand 3 versehen ist. Unter dieser Bodenwand ist wie bei den vorherigen Figuren ein Gebläse samt Antriebsmotor angeordnet, um das von einer Mähvorrichtung am Zugfahrzeug T abgemähte Gras über einen Ansaugkasten und eine nicht erkennbare, auf der in Fig. 8 abgelegenen Seite verlaufende flexible Schlauchleitung nach dem Abmähen anzusaugen und unmittelbar über eine Öffnung in der Bodenwand 3 in den Behälter 2 einzublasen. Die Rückwand 6 des Behälters ist wiederum am oberen Ende schwenkbar gelagert als Klapptür ausgebildet, um den Behälter leicht entleeren zu können. Nach Anheben der Rückwand 6 in die in Fig. 9 gezeigte Öffnungsstellung, gegebenenfalls zusätzlichem Anrucken der Mähvorrichtung nach vorwärts, rutscht das abgemähte Gras über die geneigte Bodenwand 6 auch ohne Kippen des Behälters 2 nach hinten heraus. Das Öffnen erfolgt über einen Seilzug 41 und einen Handhebel 42 vom Zugfahrzeug T aus. Der Seilzug 41 greift an einem starren Querarm 43 der Schwenkwelle 44 eines Schwenkriegels 45 an, der von unten einen Riegelzapfen 46 an der Rückwand 6 arretierend übergreift. Starr mit dem Schwenkriegel 45 ist ein Kniegelenkhebel 47 verbunden, dessen der Schwenkachse 44 abgelegener Hebel 48 ein Langloch 49 aufweist, in welches ein Mitnahmezapfen 50 an der Tür 6 einragt, während das freie Ende über eine Zugfeder 51 an der Tür 6 angreift. Beim Verschwenken des Hebelarms 43 und damit des Schwenkriegels 45 in Richtung des in Fig. 10 eingezeichneten Pfeils gibt der Schwenkriegel 45 den Riegelzapfen 46 frei. Diese Freigabebewegung wird dadurch ermöglicht, daß zunächst der Kniegelenkhebel 47 infolge des Langlochs 49 bewegt werden kann, ohne die Rückwand 6 über deren Mitnahmezapfen 50 mitzunehmen. Erst wenn das durch das Langloch 49 gebildete Spiel aufgebraucht ist, der Mitnahmezapfen 50 also am Ende des Langlochs 49 anstößt, wird die Tür bei der weiteren Verschwenkbewegung in die Öffnungsstellung nach Fig. 9 angehoben. In diesem Zeitpunkt hat aber der Schwenkriegel 45 den Riegelzapfen 46 bereits freigegeben. Beim Wiederlösen des Seilzugs 41 mit Hilfe des Handhebels 42 fällt die Rückwand 6 aufgrund ihres Eigengewichts in die Schließstellung, wobei der Schwenkriegel 45 durch die Zugfeder 51 in seiner Schließstellung federnd gehalten ist.

Um auch ein Mähen an steilen Hängen zu ermöglichen, ohne gleichzeitig eine entsprechende Spurbreite auch im ebenen Gelände und bei engen Platzverhältnissen (Ummähen von Bäumen) in Kauf nehmen zu müssen, sind bei der Ausführungsform nach Fig. 11 die Laufräder 3 mit getrennten Achsstummeln 24a versehen, die derart in den Lagern 52 drehgelagert sind, daß sie bei Bedarf in die strichpunktierte Stellung herausgezogen werden können, wobei die Auszugsstellung in einfacher Weise über einen Splint oder dergl. feststellbar ausgebildet sein kann.

Die üblichen Luftaustrittsgitter 17 in der Deckwand des Behälters 5 sind auch bei dieser Ausführungsform als schwenkbare Türklappen ausgebildet, um ein Beladen des Behälters von oben her zu ermöglichen. Ersichtlich ist wegen der geneigten Ausbildung der Bodenwand 6 ein Beladen des Behälters von rückwärts nicht möglich, da alle Gegenstände, z. B. Schaufeln, Sensen, Rechen oder dergl. sofort wieder herausrutschen würden.

Zur Vermeidung einer Beschädigung oder gar eines Abbrechens der Schaufelblätter des Gebläses beim Ansaugen von Fremdkörpern, wie Steinen, Büchsen oder dergl., sind die Schaufelblätter 53 schwenkbar am Gebläserad 54 angelenkt. An den Schaufelblättern angeformte Versteifungsrippen 55 beidseits einer Ausnehmung 56, in welche das Gebläserad 54 hineinragt, werden von einem Schwenkbolzen 57 durchsetzt. Die Tiefe des Schlitzes 56, der bei entsprechender Verschwenkung auf der Außenkante des Gebläserades 54 aufsitzt, bestimmt den möglichen Schwenkwinkel des Schaufelblattes 53. Der Behälter 2 ist in Rahmenbauweise aus dünnen, mit eingeprägten Rippen 58 versteiften Blechplatten aufgebaut, die im Kantenbereich durch Winkelschienen 59 miteinander verbunden sind. Dadurch läßt sich der Behälter aus lediglich 0,3 mm starken Blechplatten aufbauen, was zu einer beträchtlichen Gewichtsersparnis und damit einer entsprechend höheren Beladbarkeit führt.

Die Erfindung ist nicht auf das dargestellte Ausführungsbeispiel beschränkt. So wäre es beispielsweise auch möglich, die selbsteinfallende Schnellverriegelung der Rückwand in anderer Weise auszubilden, wobei lediglich darauf geachtet werden muß, daß die Verstellbewegung der Rückwand erst dann einsetzt, wenn der Riegel bereits gelöst ist.

**Patentansprüche**

1. Mähvorrichtung mit einem auf einem Fahrzeug angeordneten, nach rückwärts geschlossenen Behälter (2) mit einem geneigten Behälterboden (3), in den über einen, das an einem Zugfahrzeug befestigte Mähwerk übergreifenden Ansaugkasten (27) eine flexible Rohrleitung (9) und ein Gebläse (4) das abgemähte Gras, Laub oder dergl. eingeblasen wird, dadurch gekennzeichnet, daß der Behälter (2) auf einem mit dem Zugfahrzeug (T) verbindbaren, mit Laufrädern (23) versehenen Anhänger (1) aufgebaut ist, daß das Gebläse (4) einschließlich seiner Antriebsvorrichtung (5) unter dem geneigten Behälterboden (3) am Fahrgestell (21) angeordnet ist und daß der Behälter (2) mit das Gebläse (4) und die Antriebsvorrichtung (5) übergreifenden, nach unten über den Behälterboden überstehenden Verlängerungen der Frontwand und der Seitenwände versehen um eine im Bereich seines hinteren Endes gelegene Achse (14) kippbar am Fahrgestell (21) gelagert ist.

2. Mähvorrichtung nach Anspruch 1, gekennzeichnet durch eine innerhalb des Behälters (2), vorzugsweise unmittelbar neben der Vorderwand (37) angeordnete Hydraulik-Zylinderanordnung (36).

3. Mähvorrichtung nach Anspruch 2, dadurch gekennzeichnet, daß die Hydraulik-Zylinderanordnung (36) vom Zugfahrzeug aus betätigbar ist.

4. Mähvorrichtung nach einem der Ansprüche 1 bis 3, dadurch gekennzeichnet, daß das Gebläse (4) mit seinem Auslaßstutzen (10) in die Einblasöffnung (11) des Behälterbodens (3) frei einragt.

5. Mähvorrichtung nach einem der Ansprüche 1 bis 4, dadurch gekennzeichnet, daß die Einblasöffnung (11) mit einer sie bei abgeschaltetem Gebläse (4) abdeckenden Verschlußklappe (13) versehen ist.

6. Mähvorrichtung nach Anspruch 5, dadurch gekennzeichnet, daß das Gewicht der am oberen Ende (12) am Behälterboden (3) anscharnierten Verschlußklappe (13) so auf die Gebläseleitung abgestimmt ist, daß sie bei der minimalen Gebläseleitung selbsttätig angehoben wird.

7. Mähvorrichtung nach Anspruch 5 oder 6, gekennzeichnet durch einen ein Überschlagen der Verschlußklappe (13) nach rückwärts verhindernden Anschlag.

8. Mähvorrichtung nach Anspruch 7, dadurch gekennzeichnet, daß an der Verschlußklappe (13) eine Stange (15) befestigt ist, die vor einer Verkippung der Verschlußklappe (13) in die Vertikale an der Behälterdeckwand (16) anschlägt.

9. Mähvorrichtung nach Anspruch 7 oder 8, dadurch gekennzeichnet, daß der Anschlag derart federnd ausgebildet ist, daß die Verschlußklappe (13) mit steigendem Gebläsedruck stärker öffnet.

10. Mähvorrichtung nach einem der Ansprüche 1 bis 9, dadurch gekennzeichnet, daß die als um die Überkante schwenkbare Hecktür ausgebildete Rückwand (6) des Behälters (2) mit einem Schwenkgestänge (7) versehen ist, das beim Ankippen des Behälters (2) automatisch die Rückwand (6) öffnet.

11. Mähvorrichtung nach Anspruch 10, dadurch gekennzeichnet, daß das Schwenkgestänge (7) mit einer Seilzugbetätigungseinrichtung (20) versehen ist, die nach Umlenkung am Fahrgestell (21) am Behälter, insbesondere unter dem Behälterboden (3) angreift.

12. Mähvorrichtung, insbesondere nach einem der Ansprüche 1 bis 9, dadurch gekennzeichnet, daß die als vorzugsweise um die Oberkante schwenkbare Tür ausgebildete Rückwand (6) über einen Seilzug (41) vom Zugfahrzeug (T) aus betätigbar ist.

13. Mähvorrichtung nach Anspruch 12, gekennzeichnet durch eine selbsteinfallende Schnellverriegelung der Rückwand (6).

14. Mähvorrichtung nach Anspruch 12 oder 13, dadurch gekennzeichnet, daß der von unten einen seitlichen Riegelzapfen (46) an der Rückwand (6) übergreifende Schwenkriegel (45) starr mit einem Kniegelenkhebel (47) verbunden ist, der über eine Feder (51) und einen in ein Langloch (49) einragenden Mitnahmezapfen (50) mit der Rückwand (6) verbunden ist.

15. Mähvorrichtung nach einem der Ansprüche 12 bis 14, dadurch gekennzeichnet, daß die unter dem Behälter (2) gelagerte Schwenkachse (44) des Schwenkriegels (45) einen Querarm (43) zum Angriff des Seilzugs (41) aufweist.

16. Mähvorrichtung nach einem der Ansprüche 1 bis 15, dadurch gekennzeichnet, daß die in der Deckwand des Behälters (2) liegenden Luftaustrittsgitter (17) als vorzugsweise schwenkbare Türklappen zum Beladen des Behälters (2) ausgebildet sind.

17. Mähvorrichtung nach Anspruch 16, gekennzeichnet durch einen der Deckwand (16) des Behälters (2) und dem vorzugsweise als schwenkbare Türklappe ausgebildeten Luftaustrittsgitter (17) zwischenordenbaren, den Behälterinnenraum vergrößernden, Rechteckkasten (18) mit wenigstens einer als Luftaustrittsgitter ausgebildeten Seitenwand (19).

18. Mähvorrichtung nach einem der Ansprüche 1 bis 17, dadurch gekennzeichnet, daß der Anhänger (1) ein Einachser mit im Bereich des hinteren Endes angeordneten Laufrädern (23) und einem höhenverstellbaren Stützrad (40) am vorderen Ende ist.

19. Mähvorrichtung nach einem der Ansprüche 1 bis 18, dadurch gekennzeichnet, daß der Behälter (2) derart ausgebildet ist, daß er wahlweise auf die Ladefläche eines Kraftfahrzeuges aufsattelbar ist.

20. Mähvorrichtung nach einem der Ansprüche 1 bis 19, dadurch gekennzeichnet, daß der Behälter (2) in Rahmenbauweise aus dünnen mit eingeprägten Rippen (58) versteiften Blechplatten aufgebaut ist.

21. Mähvorrichtung nach einem der Ansprüche 1 bis 20, dadurch gekennzeichnet, daß die getrennten Achsstummel (24a) der Laufräder (23) zur Spurbreitenänderung feststellbar herausziehbar am Fahrgestell gelagert sind.

22. Mähvorrichtung nach einem der Ansprüche 1 bis 21, dadurch gekennzeichnet, daß das Gebläse ein Gebläserad (54) mit in Umfangsrichtung schwenkbar angelenkten Schaufelblättern (53) enthält.

23. Mähvorrichtung nach Anspruch 22, dadurch gekennzeichnet, daß das Gebläserad (54) in einen Schlitz (56) des Schaufelblattes (53) und zwischen Versteifungsrippen (55) einragt, die von einem Schwenkbolzen (57) durchsetzt sind.

24. Mähvorrichtung nach einem der Ansprüche 1 bis 23, dadurch gekennzeichnet, daß die vorzugsweise als Teleskopachse ausgebildete Radachse (24) derart als Steckachse ausgebildet ist, daß über ihre gesamte Länge verteilt, gegebenenfalls gleichzeitig eng benachbart, Radpaare (23, 23') aufsteckbar sind.

25. Mähvorrichtung nach einem der Ansprüche 1 bis 24, dadurch gekennzeichnet, daß eine flexible Rohrleitung, vorzugsweise durch die Luftaustrittsgitter (17) der Deckwand (16) an den Gebläseauslaßstutzen (10) anschließbar ist.

26. Mähvorrichtung nach einem der Ansprüche 1 bis 25, gekennzeichnet durch einen an die flexible Rohrleitung (9) ankuppelbaren auf Rädern (25) laufenden und mit einem Schiebegriff (26) versehenen Ansaugkasten (27).

27. Mähvorrichtung nach Anspruch 26, dadurch gekennzeichnet, daß auf dem fahrbaren Ansaugkasten (27) eine motorgetriebene Räumstange (30) schwenkbar gelagert ist, die mit ihrem freien abgewinkelten Ende (31) in den Einsaugschlitz (28) des Ansaugkastens (27) einragt.

28. Mähvorrichtung nach Anspruch 26 oder 27, dadurch gekennzeichnet, daß der Räumstangen-Antrieb ein Elektromotor (29) ist, der über ein vorzugsweise an der flexiblen Rohrleitung (9) befestigtes Stromkabel (32) mit der Lichtmaschine des Gebläsemotors (5) verbindbar ist.

29. Mähvorrichtung nach einem der Ansprüche 26 bis 28, dadurch gekennzeichnet, daß im Bereich des Einsaugschlitzes (28) am Boden (34) des vorzugsweise einachsigen Ansaugkastens (27) federnde, einen Laubrechen oder dergl. bildende Stahlzinken (35) befestigt sind.

## Claims

1. Mowing device with a container (2) mounted on a vehicle, and which is enclosed at the rear, with a suitable sloped container bottom (3) into which the mown grass, or leafage or similar, is blown by means of a flexible hose (9) and a fan (4) which are mounted on a suction box (27) which extends over the moving mechanism of a towing vehicle, characterized in that the container (2) is pivot-mounted on the frame on a trailer (T), that fan (4) including its driving mechanism (5) is located under the sloping floor (3) on the frame (21) and that the container (2) with the fan (4) and the driving device (5) is mounted so that it extends downwards over theextensions of the front wall and the side walls, in the area of its axle located at the rear end.

2. Mowing device according to claim 1, characterized in that a hydraulic cylinder arragement (36) is located inside the container (2) preferably immediately close to the front wall (37).

3. Mowing device according to claim 2, characterized in that the hydraulic cylinder arrangement (36) can be operated from the vehicle.

4. Mowing device in accordance with claims 1 to 3, characterized in that the fan (4) outlet nozzles (10) extend freely into the air intake orifice (11) of the bottom of the container (3).

5. Mowing device according to one of the claims 1 to 4, characterized in that the air intake orifice (11) is equipped with a closing flap (13) which covers the said orifice when the fan (4) is switched off.

6. Mowing device according to claim 5, characterized in that the weight of the closing flap (13) which is hinged-mounted at the upper end (12) to the container bottom (3), is adapted to the fan so that it lifts up automatically with a minimal amount of air flow.

7. Mowing device according to claims 5 or 6, characterized in that a stopping device prevents the closing flap (13) from tripping backwards.

8. Mowing device according to claim 7, characterized in that a rod (15) is secured to the closing flap (13) which before tipping the closing flap (13), stops vertically against the top cover of the container (16).

9. Mowing device according to claims 7 or 8, characterized in that the stopping device is spring mounted in such a way that the closing flap (13) opens to a greater degree as the force of the airstream increases.

10. Mowing device according to one of the claims 1 to 9, characterized in that the rear wall (6) of the container (2), which can be hinged at the top edge, is provided with a pivot rod (7) which automatically opens the reaer wall (6) when the container (2) is tilted.

11. Mowing device according to claim 10, characterized in that the pivot rod (7) is provided with a cable-pull operating device (20) which engages, after return to the chassis (21) at the container, particularly under the bottom of the container (3).

12. Mowing device, particularly according to one of the claims 1 to 9, characterized in that the rear wall (6) which is preferably in the form of a door which can be hinged over the top edge, can be operated from the towing vehicle (T) by means of the draw cable (41).

13. Mowing device according to claim 12, characterized by a automatic, rapid-acting rear door (6) locking facility.

14. Mowing according to claim 12 or 13, characterized in that the pivoted locking bar (45), which engages from below with a lateral retaining pin (46) on the rear wall (6), is rigidly connected to a toggle joint (47) which is connected, by means of a spring (51) and a dog (50) which runs in a slot (49), to the rear wall (6).

15. Mowing device according to one of the claims 12 to 14, characterized in that the pivot axle (44) of the pivoted locking bar (45) located under container (2) is provided with a cross arm (43) for activating cable (41).

16. Mowing device according to one of the claims 1 to 15, characterized in that the air exit screens (17) in the top panel of the container (2) are preferably in the form of pivoted door flaps in order to load the container (2).

17. Mowing device according to claim 16, characterized by a rectangular box (18) with at least one side wall in the form of an air exit screen, and which can be located inbetween the top panel (16) of the container (2) and the air exit screen, which is to be preferably in the form of a hinged door flap and which increases the internal volume of the container.

18. Mowing device according to one of the claims 1 to 17, characterized in that the trailer (1) has a single axle equipped with wheels (23) at the rear and which is also provided with an adjustable-height supporting wheel (40) at the front.

19. Mowing device according to one of the claims 1 to 18, characterized in that the design of container (2) is such that it can be placed onto the loading surface of a lorry if necessary.

20. Mowing device according to one of the claims 1 to 19, characterized in that the container (2) is in the form of a frame construction made from thin plating reinforced by means of stamped ribbing (58).

21. Mowing device according to one of the claims 1 to 20, characterized in that the separated axle journal (24a) of the wheels (23) are mounted on the chassis in such a way that they can be extended in order to change the tracking width.

22. Mowing device according to one of the claims 1 to 21, characterized in that the fan has a fan wheel which has peripherally-mounted pivot-mounted shovel blades (53).

23. Mowing device according to claim 22, characterized in that the fan wheel (54) projects into a slot (56) of the bucket blade (53) and between the reincorcing ribs (55) which accomodate a pivot bolt (57).

24. Mowing device according to one of the claims 1 to 3, characterized in that the wheel axle (24) which is to be preferably telescopic, is designed in such a way that pairs of wheels (23, 23'), if necessary closely adjoining ones, can be slid on over its entire length.

25. Mowing device according to one of the claims 1 to 24, characterized in that a flexible hose can be connected, preferably through the air exhausting screen (17) of the top panel (16), to the fan outlet nozzles (10).

26. Mowing device according to one of the claims 1 to 25, characterized by a suction box (27) which is equipped with a slide grip (26) and which can be connected to the flexible hose (9) and which runs on wheels (25).

27. Mowing device according to claim 26, characterized in that a motor-driven clearing rod (30) is mounted on the mobile suction box (27) and the free, angled end of which (31) extends into the suction slit (28) of the box (27).

28. Mowing device according to claims 26 or 27, characterized in that the drive of the clearing rod is effected by means of an electro motor (29) which can be preferably connected to the fan motor (5) dynamo by means of a power cable (32) preferably attached to the flexible hose (9).

29. Mowing device according to one of the claims 26 to 28, characterized in that in the area of the suction slot (28) a leafage rake or similar formed by steel tines, is spring-mounted on the bottom (34) of the preferably single-axle suction box (27).

**Revendications**

1. Dispositif de fauchage, comportant un récipient (2), placé sur un véhicule, fermé à l'arrière, avec un fond incliné (3), dans lequel est soufflé de l'herbe coupée, des feuilles mortes ou d'autres produits semblables, par l'intermédiaire d'une boîte d'aspiration (27), coiffant un appareil de fauchage fixé sur un véhicule de traction d'une conduite de tuyau flexible (9) et d'une soufflerie (4), caractérisé par le fait que le récipient (2) est monté sur une remorque (1) munie de roues (23), pouvant être reliée à un véhicule tracteur, que le soufflerie (4) et son dispositif d'entraînement (5) sont disposés sur le chassis du véhicule (21), sous le fond incliné (3) du récipient et que le récipient (2), muni de prolongements d'une paroi frontale, dépassant le fond du récipient par le bas et coiffant la soufflerie (4) et le dispositif d'entraînement (5) et des parois latérales, est pivotant autour d'un axe (14) situé dans la région arrière et fixé sur le chassis du véhicule (21).

2. Dispositif de fauchage, conforme à la revendication 1, caractérisé par le fait que, à l'intérieur du récipient (2), de préférence à côté de la paroi frontale (37), est disposé un groupe à vérin hydraulique (36).

3. Dispositif de fauchage, conforme à la revendication 2, caractérisé par le fait que le groupe à vérin hydraulique (36) peut être commandé à partir du véhicule de traction.

4. Dispositif de fauchage, conforme à l'une des revendications 1 à 3, caractérisé par le fait que la soufflerie (4) pénètre librement de par sa tubulure d'évacuation (10) dans l'ouverture de soufflage (11) du fond due récipient (3).

5. Dispositif de fauchage, conforme à l'une des revendications 1 à 4, caractérisé par le fait que l'ouverture de soufflage (11) est munie d'un capuchon de fermeture (13) qui l'obture, lorsque la soufflerie (4) est arrêtée.

6. Dispositif de fauchage, conforme à la revendication 5, caractérisé par le fait que le poids du capuchon de fermeture (13), tournant à son extrémité supérieure (12) sur charnière fixée contre le fond du récipient (3), est calculé, au point de vue poids, par rapport au flux de la soufflerie de telle façon qu'un fonctionnement minimal de celle-ci le soulève automatiquement.

7. Dispositif de fauchage, conforme à la revendication 5 ou 6, caractérisé par une butée qui empêche un rebondissement vers l'arrière du capuchon de fermeture (13).

8. Dispositif de fauchage, conforme à la revendication 7, caractérisé par le fait que, sur le capuchon de fermeture (13) est fixée une tringle (15)

qui, avant un basculement à la verticale du capuchon de fermeture (13), bute contre le plafond (16) de récipient.

9. Dispositif de fauchage, conforme aux recendications 7 ou 8, caractérisé par le fait que cette butée est élastique au point que le capuchon de fermeture (13) dégage l'ouverture d'avantage, lorsque la pression de la soufflerie augmente.

10. Dispositif de fauchage, conforme à l'une des revendications 1 à 9, caractérisé par le fait que la paroi arrière (6) du récipient (2), construite comme porte arrière, pouvant pivoter autour de son rebord, est munie d'une tringlerie de pivotement (7) qui ouvre automatiquement la paroi arrière (6), lorsqu'on bascule le récipient (2).

11. Dispositif de fauchage, conforme à la revendication 10, caractérisé par le fait que la tringlerie de pivotement (7) est munie d'un dispositif de manutention par câble (20) qui, après contournement de chassis (21) a son point d'attaque au récipient, en particulier en dessous du fond de récipient (3).

12. Dispositif de fauchage, conforme à l'une des revendications 1 à 9, caractérisé par le fait que la paroi arrière (6), construite comme porte arrière, pouvant pivoter autour de son rebord, peut être manoeuvrée par traction du câble (41) à partir du véhicule de traction (T).

13. Dispositif de fauchage, conforme à la revendication 12, caractérisé par le fait que la paroi arrière (6) possède un verrouillage rapide à encliquetage automatique.

14. Dispositif de fauchage, conforme à la revendication 12 ou 13, caractérisé par le fait que le verrou pivotant (45) saississant par le bas une cheville latérale de verrouillage (46), fixée contre le paroi arrière (6), est relié rigidement à un levier coudé (47), lui-même relié à la paroi arrière (6) par l'intermédiaire d'un ressort (51) et un piton d'untraînement (50) qui pénètre dans un trou oblong (49).

15. Dispositif de fauchage, conforme à l'une des revendications 12 à 14, caractérisé par le fait que l'axe de pivotement (44) du verrou pivotant (45) situé sous le récipient (2), présente un bas transversal (43) portant le point d'attaque du câble de traction (41).

16. Dispositif de fauchage, conforme à l'une des revendications 1 à 15, caractérisé par le fait que les grilles (17) d'évacuation de l'air sont construites, de façon préférentielle, comme des portes rabattables pour permettre le chargement du récipient (2).

17. Dispositif de fauchage, conforme à la revendication 16, caractérisé par un cadre rectangulaire (18) pouvant être aménagé entre le plafond (16) du récipient (2) et la grille (17) d'évacuation d'air, construite de façon préférentielle comme porte rabattable et destiné à augmenter le volume intérieur du récipient (2), l'une au moins des faces latérales (19) étant construite comme grille d'évacuation d'air.

18. Dispositif de fauchage, conforme à l'une des revendications 1 à 17, caractérisé par le fait que la remorque (1) est à un seul essieu, comportant dans la région d'extrémité arrière des roues de roulement (23) et à l'extrémité avant, une roue d'appui (40) réglable en hauteur.

19. Dispositif de fauchage, conforme à l'une des revendications 1 à 18, caractérisé par le fait que le récipient (2) est construit de telle façon qu'il peut, au choix, être attelé, comme semie-remorque, sur la plateforme de chargement d'un véhicule à moteur.

20. Dispositif de fauchage, conforme à l'une des revendications 1 à 19, caractérisé par le fait que le récipient (2) est constitué par des panneaux de tôle mince avec des nervures (58) estampées, chassis et carrosserie étant en construction séparée.

21. Dispositif de fauchage, conforme à l'une des revendications 1 à 20, caractérisé par le fait que que les semi-essieux (24a) des roues de roulement (23) peuvent être amovibles et être décalés et fixés parallèlement à eux-mêmes à des fins d'augmenter la largeur de la voie.

22. Dispositif de fauchage, conforme à l'une des revendications 1 à 21, caractérisé par le fait que la soufflerie contient une roue de ventilateur (54) avec des pales pouvant pivoter dans le sens du pourtour (53).

23. Dispositif de fauchage, conforme à la revendication 22, caractérisé par le fait que la roue de ventilateur (54) pénètre dans une fente (56) de la pale (53) et entre les raidisseurs (55), qui sont traversés par un axe de pivotement.

24. Dispositif de fauchage, conforme à l'une des revendications 1 à 23, caractérisé par le fait qu l'essieu de roue (24) construit préférentiellement comme essieu télescopique, est construit de telle façon comme semi-essieu, qu'on peut y placer des paires de roues (23, 23') sur toute sa longueur, le cas échéant, en les rapprochant étroitement.

25. Dispositif de fauchage, conform à l'une des revendications 1 à 14, caractérisé par le fait qu'une conduite de tube flexible est susceptible d'être branchée sur la tubulure d'évacuation (10) de la soufflerie, de préférence à travers les grilles de sortie d'air (17) du plafond (16).

26. Dispositif de fauchage, conforme à l'une des revendications 1 à 25, caractérisé par une boîte d'aspiration (27) pouvant être raccordé à la conduite par tuyau flexible (9), déplaçable sur roues (25) et munie d'une poignée-guidon (26).

27. Dispositif de fauchage, conforme à la revendication 26, caractérisé par le fait que, sur la boîte d'aspiration (27) mobile est fixée une tringle de dégagement (30) entraînée par moteur et pouvant pivoter et qui, de son extrémité libre, repliée (31) pénètre dans la fente d'aspiration (28) de la boîte d'aspiration (27).

28. Dispositif de fauchage, conforme à la revendication 26 ou 27, caractérisé par le fait que l'entraînement de la tringle de dégagement (30) est assuré par un moteur électrique qui peut être relié à la dynamo génératrice de la soufflerie et son moteur (5) par l'intermédiaire d'un câble électrique (32) fixé préférentiellement sur la conduite de tuyau flexible (9).

29. Dispositif de fauchage, conforme à l'une des revendication 26 à 28, caractérisé par le fait que, dans la région de la fente d'aspiration (28), contre la plaque du fond (34) de la boîte d'aspiration (27), de préférence à un essieu, sont fixées des dents en acier (35), faisant ressort et formant un rateau, ou autre ustensile du même genre, pour ramasser les feuilles mortes.

FIG. 1

FIG. 2

FIG. 3

FIG. 4

FIG. 5

FIG. 7

FIG. 6

FIG. 8

FIG. 10

FIG. 9

0 016 440

FIG. 11

FIG. 12

FIG. 13

FIG. 14

FIG. 15